Europäisches Patentamt

European Patent Office

Office européen des brevets

(19)

(11) Veröffentlichungsnummer: **0 304 614 B1**

(12) **EUROPÄISCHE PATENTSCHRIFT**

(45) Veröffentlichungstag der Patentschrift: **11.12.91**

(51) Int. Cl.5: **B64C  39/00**

(21) Anmeldenummer: **88111582.8**

(22) Anmeldetag: **19.07.88**

(54) **Senkrecht startender und landender Flugkörper.**

(30) Priorität: **24.08.87 DE 3728153**

(43) Veröffentlichungstag der Anmeldung:
**01.03.89 Patentblatt  89/09**

(45) Bekanntmachung des Hinweises auf die
Patenterteilung:
**11.12.91 Patentblatt  91/50**

(84) Benannte Vertragsstaaten:
**ES FR GB IT NL SE**

(56) Entgegenhaltungen:
**GB-A- 898 360**
**US-A- 4 193 568**
**US-A- 4 214 720**
**US-A- 4 433 819**

(73) Patentinhaber: **von Kozierowski, Joachim**
**Zum Darloh Nr.5**
**W-5982 Neuenrade 4(DE)**

(72) Erfinder: **von Kozierowski, Joachim**
**Zum Darloh Nr.5**
**W-5982 Neuenrade 4(DE)**

## Beschreibung

Die Erfindung betrifft einen senkrecht startenden und landenden Flugkörper, der scheibenförmig ist.

Ein derartiger Flugkörper ist bekannt.

Dieser Flugkörper besteht aus einem feststehenden zentralen Mittelkörper auf dem sich ein am Außenumfang gelagerter Drehkörper abstützt, wobei der Vortrieb und die Verdrehstabilität über gesonderte am Umfang des zentralen Mittelkörpers angeordneten Düsen erreicht wird und wie in US Patent US-A-4 214 720 beschrieben, die Hauptaufgabe des rotierenden diskoidalen Drehkörpers darin besteht, den Auftrieb zu gewährleisten, der durch das Leiten des energiereichen Mediums über die Ober- bzw. Unterseite des Drehkörpers bewerkstelligt wird.

Die bekannten scheibenförmigen Fluggeräte bestehen aus einem ganzheitlichen Gebilde, was bei den verschiedensten Pannen immer den gesamten Flugkörper stillsetzt. Durch den Einsatz unterschiedlicher Aggregate für Auftrieb und Vortrieb und Verdrehstabilisierung ist das Konstruktionsgewicht unvorteilhaft groß. Die abgestimmte Steuerung aller Aggregate zur Erreichung der Flugstabilität in allen Flugphasen und unter unterschiedlichen Flugbedingungen ist äußerst kompliziert, wobei insbesondere bei der Bauart gemäß US-Patent US-A-4 214 720 das Leiten von heissem Medium über die Ober- und Unterseite des Drehkörpers bei grösserer Fluggeschwindigkeit aus aerodynamischen Gesichtspunkten kritisch ist. Eine wünschenswerte mehrstufige Verdichtung und Entspannung des Mediums ist mit dieser Anordnung nicht zu erzielen.

Der Erfindung liegt die Aufgabe zugrunde, einen scheibenförmigen senkrecht startenden und landenden Flugkörper so auszugestalten, daß er aus einer einzigen für alle Flugphasen geeigneten und sich nicht drehenden torusähnlichen Antriebseinheit besteht, die sich selbst im Raum stabilisiert und in die mittig auswechselbar Transport- oder Passagierkabinen eingehängt werden.

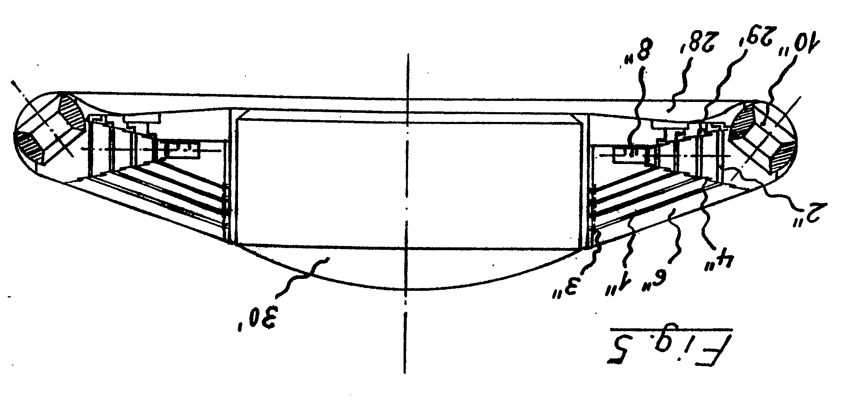

Zur Lösung dieser Aufgabe ist gemäß der Erfindung vorgesehen, daß ein senkrecht startender und landender scheibenförmiger Flugkörper (Fig.5) zum Befördern von Menschen und Gütern, bestehend aus einem mediumdurchlässigen, torusförmigen Gehäuse und einer mittig angeordneten Transport- bzw. Passagierkabine, dadurch gekennzeichnet, daß diese auswechselbar anbringbar ist und um diese in dem mediumdurchlässigen torusförmigen Gehäuse mehrere konzentrisch, berührungslos übereinander oder ineinander angeordnete gegeneinander um die Mittelachse drehbare Kreisringschalen gebildet werden, die jeweils aus mehreren sich in etwa radial erstreckenden geraden oder gekrümmten Schaufeln bestehen, die jede für sich wiederum aus einer oder zwei Verdichterschaufeln, die das Umgebungsmedium ansaugen, verdichten und einem oder mehreren Energieaggregaten zuführen, und einer Turbinenschaufel bestehen, wobei Verdichterschaufeln und Turbinenschaufeln über einen Separatorring miteinander verbunden sind und am Innenumfang und im Bereich des Außenumfangs einer jeden Schaufelschale Lagerringe vorgesehen sind, die die Schaufeln miteinander verbinden und diese gegenüber den anderen Bauteilen drehbar abstützen und daß in der innersten Kreisringschale ein oder mehrere Energieaggregate untergebracht sind, das dem durch die Verdichterschaufeln komprimierten Medium Energie zuführt und das Medium über die Turbinenschaufeln so nach außen in das Gehäuse abgibt, daß die einzelnen Kreisringschalen zueinander eine relativ oder absolut gegenläufige Rotation bekommen und daß an dem Umfang des Gehäuses verstellbare Düsen oder Leitbleche angeordnet sind, über die das Medium an die Umgebung ausgestoßen wird, wobei das Gehäuse selbst gegenüber der Mittelachse mittels einer elektronisch gesteuerten Bremsanlage an den Schalen oder über die Düsen bzw. Leitbleche oder über eine ausladende Drehmomentstütze drehstabil gehalten wird, gebildet wird.

Hierdurch ist gegenüber dem nächstkommenden Stand der Technik erreicht, daß für die unterschiedlichen Flugphasen ein und derselbe Antrieb benutzt wird und somit Totgewicht gespart wird und daß durch die rotierenden Schaufelschalen der Flugkörper eine stabilisierende Kreiselkraft erhält und eine große Menge an Medium über die durchlässige Außenhaut bereitgestellt wird, das mehrstufig verdichtet und entspannt wird und das über Verstelldüsen oder Steuerbleche geführt, den Flugkörper in alle Richtungen fortbewegt.

Die torusförmige Antriebseinheit selbst ist dabei gegenüber ihrer eigenen Mittelachse drehstabil, da ihr Außengehäuse mittels einer elekronisch gesteuerten Bremsanlage an den gegenläufigen Schalen oder über die Düsen oder über eine ausladende Drehmomentstütze gehalten wird.

Somit können auswechselbare Passagierräume im Zentrum der Antriebseinheit aufgenommen werden.

Durch die relativ großen Schubkräfte, die mit dem Flugkörper aufgrund des großen Luftdurchsatzes über seine durchlässige Außenhaut erreicht werden und durch die stabilisierende Zentrifugalkraft aus der Rotation der Schalen sowie durch die Anordnung der Verstelldüsen ist ein senkrechtes Starten, Landen und Verharren an einem Punkt in der Luft möglich.

Aufgrund der Luftaufnahme über den größten Teil der Außenhaut und aufgrund der relativ flachen Bauweise ergibt sich ein günstiger Luftwiderstandsbeiwert für den Flug in Radialrichtung.

Die großen Flächen, über welche die Luft aufgenommen wird, begünstigen das Fliegen in luftarmen großen Höhen.

Beim Fliegen in Axialrichtung und dem senkrechten Landen hilft der durch die große Kreisringfläche entstehende Luftwiderstandsbeiwert die Geschwindigkeit zu verzögern. Dieser Effekt wird durch die eingehängte Mittelkapsel noch verstärkt.

Über die elektronische Steuerung kann die Passagierkapsel während des Flugs immer so positioniert werden, daß die Reisenden bei Beschleunigungen und Verzögerungen in ihre Sitze gedrückt werden.

Die Überlegungen gelten sinngemäß für den Einsatz des Körpers im Wasser, wo der Fliehkraftring für das Transportieren von Taucherkugeln eingesetzt werden kann.

Es folgt die Beschreibung von 3 Ausführungsbeispielen in 5 Figuren gemäß der Erfindung.

Es zeigt:

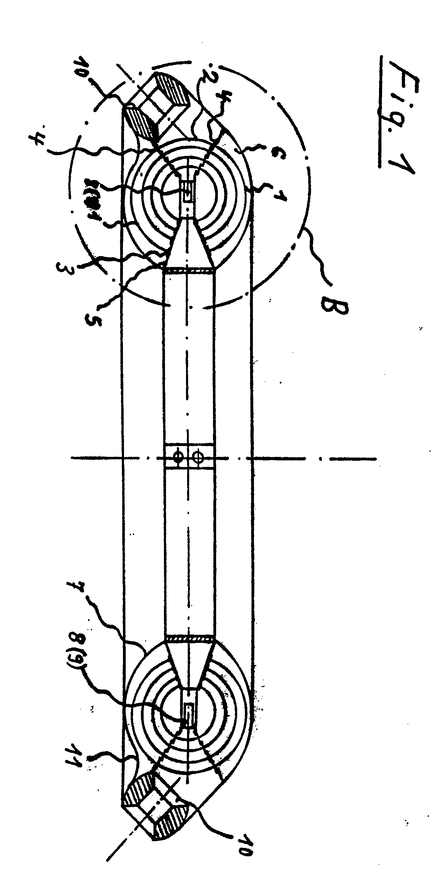

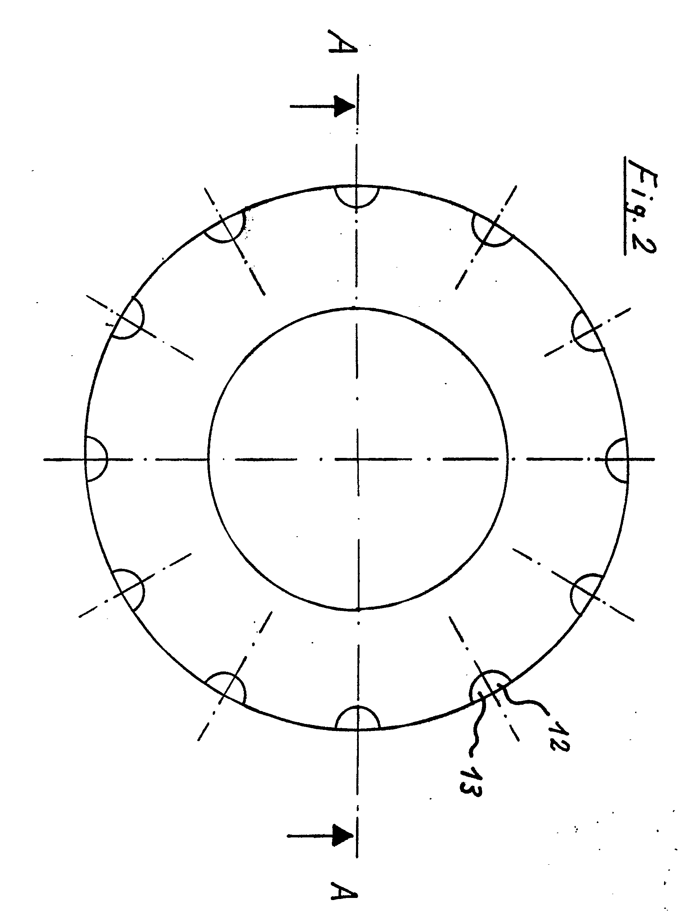

Fig. 1     einen Schnitt durch die Vorderansicht des Flugkörpers gemäß Linie A-A der Fig.2 als Ausführungsbeispiel 1 mit zwei Verdichterseiten.

Fig. 2     die Draufsicht auf den Flugkörpers des Ausführungsbeispiels 1.

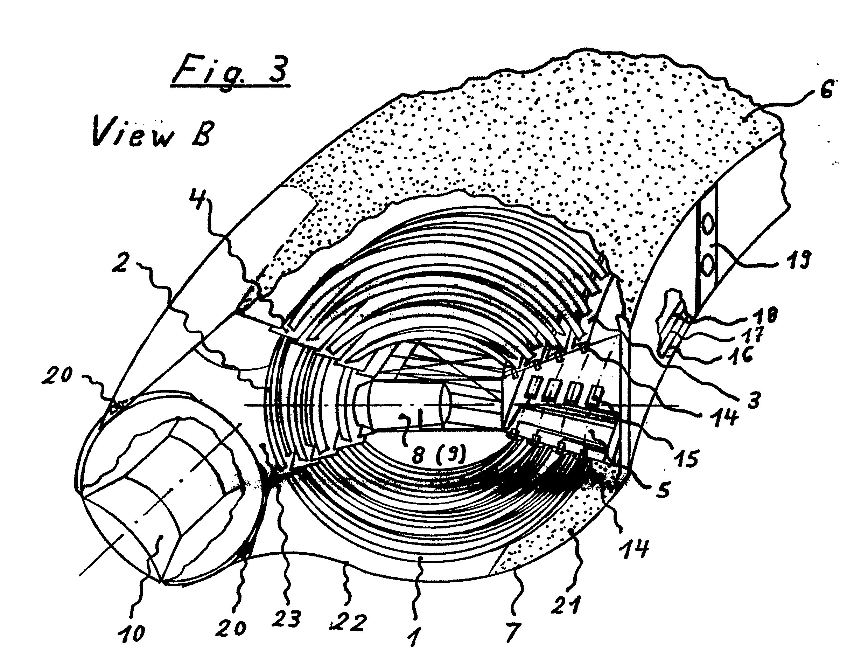

Fig. 3     den perspektivischen Ausschnitt des Flugkörpers gemäß Linie B aus Fig. 1 des Ausführungsbeispiels 1.

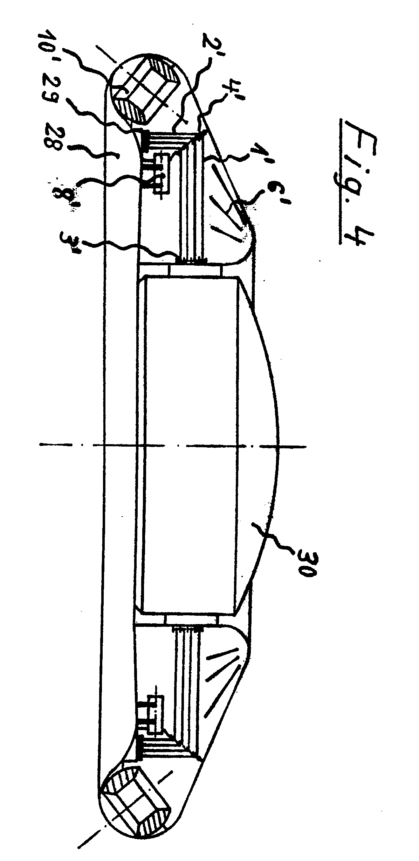

Fig. 4     einen Schnitt durch die Vorderansicht des scheibenförmigen Flugkörpers mit abgewinkelten Schalen bestehende aus geraden Verdichter- und Turbinenschaufeln und nur einer Verdichterseite als Ausführungsbeispiel 2.

Fig. 5     einen Schnitt durch die Vorderansicht eines scheibenförmigen Flugkörpers mit abgewinkelten Schalen bestehend aus geraden Verdichter- und Turbinenschaufeln und nur einer Verdichterseite als Ausführungsbeispiel 3.

Fig. 1

Auf dem zur Mittellinie des Flugkörpers bezogenen Kreisumfang bilden die nebeneinander angeordneten unteren und oberen Verdichterschaufeln 1 mit den Turbinenschaufeln 2 über die um den Mittelpunkt des Flugkörpers konzentrisch angeordneten Lagerringe 3 und Separatorringe 4 eine rotierende torusähnlich Schale.

Die auf den Schrägen 5 um die Mittelachse des Flugkörpers rotierenden Schalen verdichten mit ihren Verdichterschaufeln 1 die über die mediumdurchlässigen Außenhautbereiche 6,7 eintretende Luft. Diese wird von den auf dem Umfang angeordneten Brennkammern 8 und Gasturbinen 9 beschleunigt. Das heiße Gas treibt über die Turbinenschaufeln 2 die Schale an.

Das über Turbinenschaufeln 2 des Flugkörpers geleitete Medium wird über die nachgeordneten Verstelldüsen 10, die mit Nachbrenner ausgerüstet sein können, ausgelassen, so daß der Fliehkraftring durch den Rückstoß in die gewählte Richtung gestoßen wird. Dabei ist der Außenhautbereich 11 mediumundurchlässig.

Fig. 2

Die Positionen 12,13 stellen Schiebeschotts dar, die die Schubdüsenöffnungen automatisch öffnen und verschließen.

Fig. 3

Die gegenläufigen Schalen bestehen jeweils aus auf zwei konzentrischen Lagerringen 3 in Abständen nebeneinander befestigten und über zwei Separatorringe 4 miteinander verbundenen, hintereinander angeordneten Verdichterschaufeln 1 und Turbinenschaufeln 2, die von dem beschleunigten Medium, der, auf dem Umfang angeordneten Brennkammern 8 und/oder Gasturbinen 9 angetrieben werden.

Die den Brennkammern 8 und/oder Gasturbinen 9 nachgeordneten elektronisch gesteuerten Verstelldüsen 10, die mit Nachbrenner ausgerüstet sein können, erzeugen die für das Fortbewegen und Steuern des Fliehkraftrings notwendigen Rückstoßkräfte.

Die gegenläufig rotierenden, luftkissengelagerten Schalen haben Berührung und Führung mit den, auf dem Umfang angebrachten, elektronisch gesteuerten Bremsrädern 14, durch die die Rotationsstabilität im Zusammenwirken mit den Verstelldüsen 10 erzielt wird.

Der Luftdruck zwischen Lagerring 3 und Laufbahn 5 wird über elektronisch gesteuerte Pneumatikventile 15 geregelt, die die Pressluft aus dem Verdichter erhalten.

Datenübertragungen und Treibstoffzufuhr erfolgen über die Leitungen 16 und 17. Die Druckluftverteilung erfolgt über die Leitung 18. Alle drei Leitungen 16,17,18 werden über Kupplungen in der Andocksäule 19 mit der mittig eingehängten Transportkapsel verbunden.

Die elektronisch gesteuerten Stellmotoren 20 bringen die auf dem Umfang angebrachten Düsen 10 in die gewünschte Position.

Die Luftaufnahme der unteren Schaufeln geschieht über Bypass neben den Kammern 23 und über das mediumdurchlässige Gehäuseblech 21.

Das Blech 22 ist wahlweise luftdurchlässig oder luftundurchlässig.

Fig. 4

Auf dem zur Mittellinie des Fliehkraftrings bezogenen Kreisumfang bilden die nebeneinander angeordneten, zur Mittellinie des Fliehkraftrings im rechten Winkel stehenden Verdichterschaufeln 1' mit den parallel zur Mittellinie auf dem Umfang angeordneten Turbinenschaufeln 2' und dem gemeinsamen Separatorring 4' eine Kreisringschale mit Lagerringen 3',29.

Weitere Schalen abgestufter Größe sind konzentrisch berührungslos übereinander angeordnet und werden von dem Energieaggregat 8' über die Turbinenschaufeln der Kreisringschalen gegenläufig angetrieben, wodurch die Verdichterschaufeln der Kreisringschalen über die Öffnungen 6' der Außenhaut das umgebende Medium aufnehmen.

Das über die Turbinenschaufeln des Fliehkraftrings geleitete Medium wird über die nachgeordneten Verstelldüsen 10', die mit Nachbrenner ausgerüstet sein können, ausgestossen, so daß der Fliehkraftring mit der mittig auswechselbar eingehängten Kapsel 30 durch den Rückstoß in die gewählte Richtung gestoßen wird.

Die untere Gehäuseseite des Fliehkraftrings 28 ist mediumundurchlässig.

Fig. 5

Auf dem zur Mittellinie des Fliehkraftrings bezogenen Kreisumfang bilden die, in Abständen nebeneinander angeordneten und zur Mittelachse geneigten und über den Separatorring 4'' miteinander verbundenen Verdichter- 1'' und Turbinenschaufeln 2'' eine Kreisringschale mit Lagerringen 3'',29'.
Weitere Schalen abgestufter Größe sind konzentrisch berührungslos übereinander angeordnet und werden von dem Energieaggregat 8'' über die Turbinenschaufeln der Kreisringschalen gegenläufig angetrieben, wodurch die Verdichterschaufeln der Kreisringschalen über die Öffnungen 6'' der Außenhaut das umgebende Medium aufnehmen.

Das über die Turbinenschaufeln des Fliehkraftrings geleitete Medium wird über die nachgeordneten Verstelldüsen 10'', die mit Nachbrenner ausgerüstet sein können, ausgestossen, so daß der Fliehkraftring mit der mittig auswechselbar eingehängten Kapsel 30' durch den Rückstoß in die gewählte Richtung gestoßen wird.

Die untere Gehäuseseite des Fliehkraftrings 28' ist mediumundurchlässig.

**Patentansprüche**

1. Senkrecht startender und landender scheibenförmiger Flugkörper zum Befördern von Menschen und Gütern, bestehend aus einem mediumdurchlässigen, torusförmigen Gehäuse und einer mittig angeordneten Transport- bzw. Passagierkabine (30'), dadurch gekennzeichnet, daß diese auswechselbar anbringbar ist und um diese in dem mediumdurchlässigen torusförmigen Gehäuse mehrere konzentrisch, berührungslos übereinander oder ineinander angeordnete gegeneinander um die Mittelachse drehbare Kreisringschalen gebildet werden, die jeweils aus mehreren sich in etwa radial erstreckenden geraden oder gekrümmten Schaufeln bestehen, die jede für sich wiederum aus einer oder zwei Verdichterschaufeln (1''), die das Umgebungsmedium ansaugen, verdichten und einem oder mehreren Energieaggregaten (8'') zuführen, und einer Turbinenschaufel (2'') bestehen, wobei Verdichterschaufeln und Turbinenschaufeln über einen Separatorring (4'') miteinander verbunden sind und am Innenumfang und im Bereich des Außenumfangs einer jeden Schaufelschale Lagerringe (3'',29') vorgesehen sind, die die Schaufeln miteinander verbinden und diese gegenüber den anderen Bauteilen drehbar abstützen und daß in der innersten Kreisringschale ein oder mehrere Energieaggregate (8'') untergebracht sind, das dem durch die Verdichterschaufeln (1'') komprimierten Medium Energie zuführt und das Medium über die Turbinenschaufeln (2'') so nach außen in das Gehäuse abgibt, daß die einzelnen Kreisringschalen zueinander eine relativ oder absolut gegenläufige Rotation bekommen und daß an dem Umfang des Gehäuses verstellbare Düsen (10'') oder Leitbleche angeordnet sind, über die das Medium an die Umgebung ausgestoßen wird, wobei das Gehäuse selbst gegenüber der Mittelachse mittels einer elektronisch gesteuerten Bremsanlage an den Schalen oder über die Düsen bzw. Leitbleche oder über eine ausladende Drehmomentstütze drehstabil gehalten wird.

2. Senkrecht startender und landender scheibenförmiger Flugkörper dadurch gekennzeichnet, daß die Verstelldüsen (10'') schwenkbar am Durchmesser des Fliehkraftrings befestigt sind und durch Einstellung in Axialrichtung der Flugkörper vertikalen Auftrieb bekommt und senkrecht starten und landen kann.

3. Senkrecht startender und landender scheibenförmiger Flugkörper nach einem der Ansprüche 1 oder 2, dadurch gekennzeichnet, daß das Aussengehäuse und die daran mittig auswechselbar angedockten Passagier- oder Transportkapseln (30') in Bezug auf die Mittelachse beliebig gedreht und positioniert wer-

den.

axis.

## Claims

**1.** Vertically take-off and landing disc-type aircraft for transporting of people and goods, consisting of a permeable and toruslike body for receiving in its center a transport or passengers cabin (30'), identified in the way, that this one is interchangeably hooked thereinto and around this in the permeable toruslike body some concentrical, without contact above each other or inside each other arranged circular ring shells, which rotate in opposite directions around the center axis are formed, each of them consisting of several more or less radially stretched blades, of which each one consists of one or two compressor blades (1") which intake the medium, compress it and lead it to one or more energy aggregates (8") and one turbine blade (2"), said blades being connected to each other through one separator ring (4") and at the inner circle and at the outer circle of every ring shell bearing rings (3",29") are arranged, which connect the blades to each other and rotationally prop them up against the other construction elements and that in the innermost ring shell one or more energy aggregates (8") are located, which give energy to the medium, which is compressed by the compressor blades (1") and expell the medium through the turbine blades (2") in that way out into the housing, that every ring shell obtains a relative or absolute rotation in respect to each other and that at the outer diameter of the housing adjustable nozzles (10") or guide means are attached through which the medium is expelled out, whereby the housing itself is held rotationally stable with respect to the center axis by an electronically controlled braking device on the ring shells or by nozzles or guide means or by an overhanging stabilizer.

**2.** Vertically taking off and landing disk-type aircraft identified in the way, that the adjustable nozzles (10") are pivotably attached at the diameter of the centrifugal ring and that the centrifugal ring obtains vertical lift by adjustment in axial direction and can take off and land vertically.

**3.** Vertically taking off and landing disk-type aircraft according to claim 1 or 2, identified in the way that the outer housing and the centrally interchangeably passengers or transport capsule (30') docked thereto is rotatable and positionable as desired relative to the center

## Revendications

**1.** Engin d'aviation en forme de disque pouvant décoller et atterrir verticalement déstiné au transport de personnes et de biens, consistant d'un corps torique perméable au milieu et d'une cabine de transport ou de passagers (30') arrangée au centre, caractérisé par le fait que celle-la est interchangeablement montable et qu'autour dans le corps torique perméable se trouvent plusieurs coupes concentriques pivotantes autour de l'axe central qui sont arrangées sans se toucher l'une sur l'autre ou l'une dans l'autre, dont chaqu'une se compose d'aubes droites ou courbées, plus ou moins arrangées radialement et que chaque aube se compose d'une ou de deux aubes de compression (1") qui aspirent le milieu, compressent et guident celui-ci vers un ou deux engins d'énergie (8") et une aube de turbine (2"), et que les aubes de compression et les aubes de turbine sont reliées à travers d'un anneau de séparation (4") et qu'au diamétre intérieur et au diamétre extérieur de chaque coupe des anneaux de coussinet (3",29') sont prévus, qui relient les aubes et qui les supportent pivotablement contre les autres éléments de construction et que dans la coupe la plus interne se trouvent un ou deux engins d'énergie (8") qui injectent de l'énergie au milieu, comprimé par les aubes de compression (1") et que l'air (milieu) est éjecté à travers les aubes de turbine (2") dans le corps de la manière que chaqu'une des coupes obtient une rotation qui est relativement ou absolument contre le sens de rotation de la coupe voisine et qu'à l'entour du corps des jets orientables (10") ou tôles de guidage sont arrangés sur lesquels le milieu est éjecté aux entours et que le corps lui-meme est tenu stable contre la rotation autour de l'axe central par moyen d'un frein électroniquement actionné situé sur les coupes ou de jets ou de toles de guidage ou par moyen d'un bras de stabilisation de couple.

**2.** Engin d'aviation en forme de disque pouvant décoller et atterrir verticalement caractérisé par le fait que les jets réglables et orientables (10") sont arrangés à la périphérie de l'anneau centrifuge et que par l'orientation en direction axiale l'engin d'aviation recoit une force ascensionnelle et peut décoller et atterrir verticalement.

**3.** Engin d'aviation en forme de disque pouvant décoller et atterrir verticalement selon les revendications 1 ou 2, caractérisé par le fait, que le corps extérieur et la capsule de passager ou de transport (30') qui est interchangeablement enclenchée au centre peuvent-être orientés et positionnés librement par rapport à l'axe central.

Fig. 1

EP 0 304 614 B1

Fig.2

A

A

12

13

8

Fig. 3

View B

EP 0 304 614 B1

Fig. 4

10

EP 0 304 614 B1

Fig. 5

11